# EUROPÄISCHE PATENTANMELDUNG

(11) **EP 2 059 085 A2**
(43) Veröffentlichungstag der Anmeldung: **13.05.2009**
(21) Anmeldenummer: 08019599.3
(22) Anmeldetag: 10.11.2008
(51) Int. Cl.: H04W 76/02

(54) **Verfahren zum automatischen und kostenoptimierten Aufbau einer Telekommunikationsverbindung**

(30) Priorität: 09.11.2007 AT 18092007
(71) Anmelder: Wirtl, Reinhard, 4283 Bad Zell (AT)
(72) Erfinder: Wirtl, Reinhard, 4283 Bad Zell (AT)
(74) Vertreter: Secklehner, Günter

(57) **Zusammenfassung**

Die Erfindung betrifft ein Verfahren zum automatischen und kostenoptimierten Aufbau einer Telekommunikationsverbindung zwischen einer mobilen Kommunikationsvorrichtung und einer Kommunikationsgegenstelle umfassend zumindest ein zellulares Mobilfunknetzwerk (5) mit einer eindeutigen Netzwerkkennung (15), zumindest eine Mobilstation (2) die mit dem Mobilfunknetzwerk (5) kommunikativ verbunden ist und die eine eigene.Netzwerkkennung hinterlegt hat, ein Kommunikationsnetzwerk (6) das zumindest über ein Gateway (8) und eine Direktverbindung (7) mit dem Mobilfunknetzwerk (5) verbunden ist und zumindest eine Kommunikationsgegenstelle (3) aufweist, wobei geprüft wird, ob die Netzwerkkennung der Mobilstation mit der Netzwerkkennung des Mobilfunknetzwerks übereinstimmt und ob ein Abschnitt der Identifikationskennung der Kommunikationsgegenstelle in einer Kommunikationswegtabelle hinterlegt ist.

## Beschreibung

Die Erfindung betrifft ein zum kostenoptimierten Aufbau einer Telekommunikationsverbindung zwischen einer mobilen Kommunikationsvorrichtung und einer Kommunikationsgegenstelle.

Zum Aufbau einer Telekommunikationsverbindung wird von einer rufenden Station eine eindeutige Identifikationskennung an eine Vermittlungseinrichtung übermittelt, worauf diese eine Kommunikationsverbindung zur empfangsbereiten Kommunikationsgegenstelle aufbaut. Derartige Kommunikationssysteme sind aus dem Stand der Technik hinlänglich bekannt. Im Zuge der weitgehenden Liberalisierung des Telekommunikationsmarktes existieren mittlerweile jedoch eine Mehrzahl von Anbietern von Kommunikationsverbindungsnetzwerken, mit zumeist deutlich unterschiedlicher Tarifierung der aufgebauten bzw. durchgeführten Kommunikationsverbindungen. Der mobil Kommunizierende sieht sich also dem Problem gegenüber, aus einer Mehrzahl möglicher Kommunikationsverbindungen, das für den Aufbau der aktuellen Kommunikationsverbindung günstigste Netzwerk zu wählen. Zur Bewältigung dieser Aufgabe sind aus dem Stand der Technik Einrichtungen zur optimierten Kommunikationsverbindungsplanung bekannt, insbesondere handelt es sich dabei um sogenannte Least-Cost-Router.

Ist nun die rufende Station ein Mobiltelefon, bspw. ein GSM- bzw. 3G-Mobiltelefon, kommt zusätzlich zur Wahl des günstigsten Verbindungsnetzwerks zur Zielstation noch eine weitere Variable hinzu, da das Mobiltelefon in einem Mobilfunknetz angemeldet ist und ggf. auch für die Funkstrecke Gebühren anfallen.

Zur Findung der kostengünstigsten Kommunikationsverbindung zwischen einem Mobiltelefon und einer Kommunikationsgegenstelle ist aus der DE 103 41 737 B4 ein Verfahren und System zum automatischen und benutzerindividuellen Least-Cost-Routing in einem Telekommunikationssystem bekannt. Das Telekommunikationssystem umfasst mindestens ein Mobilfunknetz, mindestens eine Mobilstation, sowie mindestens ein Festnetz, wobei zwischen dem Mobilfunknetz und dem Festnetz ein so genanntes Gateway kommunikativ verbunden angeordnet ist. Das Dokument offenbart, dass nach Eingabe der Zielrufnummer der Kommunikationsgegenstelle am Mobiltelefon die Zielrufnummer ausgewertet wird und entweder die direkte Wahl der Zielrufnummer durchgeführt wird, oder aus einer hinterlegten Tabelle eine Kennung eines von mehreren möglichen Gateways ausgelesen wird, zu dem das Mobiltelefon im aktuell angemeldeten Mobilfunknetz die günstigste Verbindung herstellen kann. Da gerufene Gateway nimmt die eingehende Verbindungsaufbauanforderung an, und wertet die übertragene Zielrufnummer aus. Am Gateway ist ebenfalls wieder eine Kommunikationswegtabelle hinterlegt, wobei die Kommunikationssteuerung am Gateway aus den möglichen Kommunikationsverbindungen diejenige auswählt, über die die Kommunikationsgegenstelle am günstigsten erreichbar ist. Nach Aufbau der Kommunikationsverbindung koppelt das Gateway das Mobiltelefon mit der Kommunikationsgegenstelle. Weiters ist offenbart, dass sich die einzelnen Gateways mit den Mobiltelefonen synchronisieren, um so die Kommunikationswegtabellen aktuell halten zu können.

Aus der EP 1 207 702 A2 ist weiters eine Vorrichtung und ein Verfahren bekannt, um eine Kommunikationseinrichtung, insbesondere ein leitungsgebundenes Telefon, dahingehend zu verbessern, dass bei jedem abgehenden Anruf der günstigste Kommunikationsanbieter gewählt wird. Dazu wird die Vorrichtung in die Leitungsverbindung zwischen der Kommunikationsgegenstelle und dem Netzwerkanschluss, insbesondere der Telekommunikationsanschlussdose, geschaltet. Bei einer Verbindungsaufbauanforderung unterbricht die Vorrichtung die Telekommunikationsleitung, analysiert die Zielrufnummer der Kommunikationsgegenstelle und wählt aus hinterlegten Kommunikationswegen den günstigsten Kommunikationsweg aus. Dazu wählt die Vorrichtung eine so genannte Netzbetreibervorwahl und wählt dann die zwischengespeicherte Zielrufnummer der Kommunikationsgegenstelle nach.

Die Nachteile des Stands der Technik liegen bspw. darin, dass eine Wahleinrichtung in die Telekommunikationsleitung eingeschleust werden muss, was einmal einen zusätzlichen Aufwand bedeutet und auch nur für kabelgebundene Teilnehmer möglich ist. Das weitere bekannte Verfahren ist zwar dazu geeignet, von einem Mobiltelefon abgehende Anrufe kostengünstig zu vermitteln, jedoch sind dazu eine Mehrzahl von Gateways erforderlich, und zusätzlich ist sowohl auf dem Mobiltelefon und auch auf dem Gateway eine Kommunikationswegtabelle hinterlegt, die zur Durchführung des optimierten Verbindungsaufbaus immer aktuell gehalten werden müssen. Bei einer Vielzahl von Mobiltelefonen und einer Mehrzahl von Gateways führt dies zu einem nicht unbeträchtlichen Synchronisationsaufwand und birgt weiters die Gefahr, dass einzelne Komponenten nicht aktuelle Kommunikationswegtabellen verfügbar haben. Weiters von Nachteil ist, dass das Gateway die eingehende Verbindung immer annehmen muss, um die Zielrufnummer auswerten zu können. Durch diese Verbindungsannahme kommt es in jedem Fall zum Aufbau einer kostenpflichtigen Kommunikationsverbindung, ohne dass sicher ist, dass die Kommunikationsgegenstelle erreichbar ist. Für den Benutzer des Mobiltelefons fallen also bei jedem Verbindungsaufbauversuch unweigerlich Kosten an.

Moderne GSM- bzw. 3G-Mobiltelefone haben jedoch den Vorteil, dass damit auch eine Mobilkommunikation außerhalb der Grenzen des jeweiligen Heimatfunknetzes, insbesondere über die Landesgrenzen hinaus möglich ist. Mobile Kommunikation außerhalb des Heimatnetzes ist jedoch zumeist sehr kostspielig, da die Netzgebühren der jeweiligen Fremdanbieter anfallen (aktiv bzw. passiv Roaming). Gerade bei Telefonaten in einem Fremdnetz, also wenn das Mobiltelefon in einem Fremdnetz angemeldet ist, ist es von besonderem Nachteil, wenn zur Findung eines kostengünstigen Kommunikationswegs eine gebührenpflichtige Verbindung aufgebaut werden muss. Eine direkte Wahl aus einem Fremdnetz ist ebenfalls nachteilig, da die Gebühren für abgehende Anrufe deutlich über denen für ankommende (passive) Gespräche liegen.

Aufgabe der Erfindung ist es daher, ein Verfahren und ein Telekommunikationssystem zur Herstellung einer kostenoptimierten Kommunikationsverbindung zwischen einem Mobiltelefon und einer Kommunikationsgegenstelle zu finden, dass sowohl im Heimatnetz als auch in einem fremden Mobilnetz eine kostengünstige Kommunikationsverbindung aufbaut.

Die Aufgabe der Erfindung wird durch die Verfahrensschritte nach Anspruch 1 gelöst. Nach Eingabe bzw. Auswahl einer eindeutigen Identifikationskennung der gewünschten Kommunikationsgegenstelle an der Mobilstation und Auslösen einer Verbindungsaufbauanforderung, wird bei einer bekannten Mobilstation von der bestimmungsgemäß vorhandenen Ablaufkontrolle die Steuerung des Verbindungsablaufs und somit die Herstellung einer Kommunikationsverbindung durchgeführt. Das Auslösen einer Verbindungsaufbauanforderung kann jedoch auch als ausgezeichnetes Ereignis herangezogen werden, um in spezieller Weise darauf reagieren zu können, insbesondere um den Standardablauf zu verlassen und eine eigene speziell angepasste Ablaufsteuerung durchführen zu können. Bei bekannten Mobilstationen, insbesondere bei Mobiltelefonen, würde nach Bestätigung des Verbindungsaufbauwunsches die Applikationsplattform eine Kommunikationssteuerung starten, die ihrerseits den Verbindungsaufbau über eine Hochfrequenzkommunikationsschnittstelle des Mobilteils mit der Funkgegenstelle des Mobilfunknetzes aufbaut. Durch die erfindungsgemäße Ausbildung wird vor dem Aufbau der Kommunikationsverbindung die Verbindungssteuerungskontrolle gestartet, insbesondere in dem Ablaufanweisungen in die Applikationsplattform geladen werden und somit ohne Zutun des Benutzers gestartet und ausgeführt werden.

Die Verbindungssteuerungskontrolle ist erfindungsgemäß durch ein Software-Programm gebildet ist, das auf einer Applikationsplattform des Mobilteils ausgeführt wird. Da auf dieser Applikationsplattform auch die weiteren Ablaufsteuerungen ausgeführt werden, die zum bestimmungsgemäßen Betrieb der Mobilstation erforderlich sind, ist eine nahtlose Integration der Verbindungssteuerungskontrolle in die Betriebssteuerung der Mobilstation sichergestellt. Von besonderem Vorteil ist dabei, dass die Auswertung der Identifikationskennung der Kommunikationsgegenstelle und die Auswahl der entsprechenden Kommunikationsverbindung im Hintergrund geschieht, sodass der Benutzer von diese Vorgängen nichts bemerkt und insbesondere keine Bedienhandlungen erforderlich sind.

In vorteilhaften Weiterbildungen ist die Applikationsplattform bspw. durch das Symbian- bzw. Windows-Mobile-Betriebssystem gebildet. Diese Ausbildungen haben den Vorteil, dass diese Betriebssysteme besonders weit verbreitet sind und durch den hohen Standardisierungsgrad der angebotenen Schnittstellen, eine zuverlässige Funktion und nahtlose Integration der Verbindungssteuerungskontrolle sicherstellt. Weiters ist von Vorteil, dass diese Betriebssysteme einen sehr flexiblen Zugriff auf die funknetzwerkspezifische Kommunikationsablaufsteuerung bieten und somit eine optimale Wahl der Kommunikationsverbindung ermöglichen, unabhängig vom Mobilfunknetz in dem das Mobilteil angemeldet ist.

Eine wesentliche Aufgabe des erfindungsgemäßen Verfahrens liegt darin, festzustellen, ob die Mobilstation im Heimatnetz oder in einem fremden Mobilfunknetz angemeldet ist, da Kommunikationsverbindungen über ein fremdes Mobilnetz immer mit deutlich erhöhten Kosten verbunden sind. Zur eindeutigen Identifikation eines Mobilfunknetzwerks hat ein jedes einen weltweit eindeutigen Netzwerkcode, der sich aus einem Länder- und einem Betreibercode zusammensetzt. Damit sich die Mobilstation mit einem Mobilfunknetzwerk verbinden kann, ist auch auf der Mobilstation eine Netzwerkkennung hinterlegt. Stimmen die Netzwerkkennungen der Mobilstation mit der Netzwerkkennung des Mobilfunknetzwerks überein, ist die Mobilstation im Netzwerk des Mobilfunkbetreibers angemeldet, anderenfalls ist die Mobilstation in einem Fremdnetz angemeldet und es fallen somit die erhöhten Verbindungsgebühren an. Bei Übereinstimmung wird das sogenannte Call-through-Verfahren durchgeführt, bei keiner Übereinstimmung verzweigt die Verbindungssteuerungskontrolle zum Call-Back-Verfahren.

Beim Call-through-Verfahren befindet sich die Mobilstation im Heimatnetz und es gibt somit zumeist besonders günstige Kommunikationsverbindungen in das Kommunikationsnetzwerk, bevorzugt sind manche Zielrufnummern ohne Gebühren erreichbar. Um entscheiden zu können, ob das erfindungsgemäße Verfahren fortgesetzt werden soll, gilt es herauszufinden, welche die günstigste Kommunikationsverbindung zur gewünschten Kommunikationsgegenstelle ist. Auf der Mobilstation, insbesondere auf einer Applikationsplattform bzw. in einem Speichermodul, ist eine Kommunikationswegtabelle hinterlegt in der festgelegt ist, welche Kommunikationsgegenstellen durch das erfindungsgemäße Verfahren weiter vermittelt werden sollen, bzw. welche Verbindungen über den Standardkommunikationsweg aufgebaut werden sollen. Dazu wird aus der Identifikationskennung zumindest der Bereichscode sowie ggf. ein Abschnitt des Teilnehmercodes mit Einträgen in der Kommunikationswegtabelle verglichen. Kann keine Übereinstimmung gefunden werden, übergibt die Verbindungssteuerungskontrolle die Steuerung des Verbindungsaufbaus wieder zurück an die Ablaufkontrolle der Mobilstation, die über den standardmäßigen Verbindungsweg die Kommunikationsverbindung aufbaut.

Konnte eine Übereinstimmung in der Kommunikationswegtabelle gefunden werden, wird eine zumeist kostenlose erste Kommunikationsverbindung zum Gateway hergestellt. Das Gateway nimmt die eingehende Kommunikationsverbindung an und bekommt dann von der Mobilstation die Identifikationskennung der gewünschten Kommunikationsgegenstelle übermittelt. Das Gateway hält die erste Kommunikationsverbindung aufrecht und stellt eine zweite Kommunikationsverbindung zur gewünschten Kommunikationsgegenstelle her. Dann koppelt das Gateway die erste mit der zweiten Kommunikationsverbindung und stellt somit eine durchgehende Kommunikationsverbindung von der Mobilstation zur Kommunikationsgegenstelle her.

Beim Call-Back-Verfahren stimmt die Netzwerkkennung der Mobilstation nicht mit der des Mobilfunknetzwerks überein, die Mobilstation ist daher in einem fremden Mobilfunknetz angemeldet. Zur Reduktion der Kosten ist es in diesem Fall von entscheidender Bedeutung, wenn von der Mobilstation keine abgehende Verbindung aufgebaut wird. Daher führt die Verbindungssteuerungskontrolle an der Mobilstation eine Verbindungsaufbauanforderung zum Gateway durch. Bei dieser Verbindungsaufbauanforderung wird die Kennung der rufenden Mobilstation an das Gateway übertragen, ohne dass es zum Aufbau einer Kommunikationsverbindung kommt.

Das Gateway extrahiert die Kennung der rufenden Mobilstation aus der Verbindungsaufbauanforderung, speichert diese Kennung kurzzeitig zwischen und beendet den Verbindungsaufbau.

Dann stellt das Gateway mittels der hinterlegten Kennung der Mobilstation die erste Kommunikationsverbindung zur Mobilstation her. Die Verbindungssteuerungskontrolle an der Mobilstation erwartet den Rückruf des Gateways, nimmt daher die Verbindungsaufbauanforderung an und übermittelt ihrerseits die Identifikationskennung der gewünschten Kommunikationsgegenstelle an das Gateway.

Die weiteren Verfahrensschritte stimmen mit denen des Call-through-Verfahrens überein, insbesondere stellt das Gateway die zweite Kommunikationsverbindung zur Kommunikationsgegenstelle her und koppelt die erste und zweite Kommunikationsverbindung.

Gemäß einer Weiterbildung weist die Mobilstation eine Mensch-Maschine-Schnittstelle auf, mit der eine Identifikationskennung eingegeben werden kann, bzw. eine Identifikationskennung aus hinterlegten Identifikationskennungen ausgewählt werden kann. Diese Ausbildung hat den Vorteil, dass der Benutzer der Mobilstation die eindeutigen Identifikationskennungen der Mehrzahl der Kommunikationspartner an der Mobilstation hinterlegen kann und diese mittels einer komfortablen Benutzerführung rasch und einfach auswählen kann, ohne die konkrete Identifikationskennung auswendig wissen zu müssen.

Einen ganz besonderen Vorteil im Hinblick auf die Benutzerfreundlichkeit erhält man, wenn die Verbindungssteuerungskontrolle und die Kommunikationswegtabelle über das zellulare Mobilfunknetzwerk an die Mobilstation übertragen werden. Zur Aktivierung der Kommunikationswegoptimierung ist es daher nicht erforderlich, dass der Benutzer das Mobilteil an einem Repräsentationspunkt des Dienstanbieters bereitstellen muss, um die Verbindungssteuerungskontrolle und die Kommunikationswegtabelle auf die Applikationsplattform aufzuspielen bzw. in einem Speichermittel in der Mobilstation zu hinterlegen. In vorteilhafter Weise kann sich der Benutzer jederzeit dazu entscheiden, die optimierte Kommunikationswegplanung für seine Mobilstation zu aktivieren und bekommt dann ohne weiteres Zutun die entsprechenden Komponenten auf seine Mobilstation übertragen, wo es bevorzugt in einem Speichermodul abgelegt wird.

Das erfindungsgemäße Verfahren umfasst einen Schritt, bei dem eine direkte Kommunikationsverbindung zwischen der Mobilstation und der Kommunikationsgegenstelle hergestellt wird. Mit der anspruchsgemäßen Ausbildung ist nun sichergestellt, dass beim Aufbau einer direkten Kommunikationsverbindung die Verbindungssteuerungskontrolle inaktiv ist und somit nur die Ablaufsteuerung der Mobilstation den Verbindungsaufbau durchführt.

Insbesondere hat diese Ausbildung den weiteren Vorteil, dass Benutzer die Möglichkeit hat, die Verbindungssteuerungskontrolle gezielt zu deaktivieren und somit ausschließlich die Basisfunktionalität der Mobilstation zu benutzen, ohne das es durch die hinterlegte Verbindungssteuerungskontrolle zu einer Beeinflussung der Kommunikationssteuerung der Mobilstation kommt.

Gemäß einer Weiterbildung, bei der die Identifikationskennung mittels Tonwahl an das Gateway übermittelt wird ist in vorteilhafter Weise sichergestellt, dass dieser Verfahrensschritt keine zusätzlichen bzw. Sonderkomponenten an der Mobilstation erforderlich macht, sodass diese Tonwahl über einen standardmäßig vorhandenen Tongenerator, insbesondere einen DTMF-Tongenerator durchgeführt werden kann. Die DTMF-Tonwahl ist weit verbreitet, standardisiert und ermöglicht eine sichere und zuverlässige Übertragung der Identifikationskennung.

Für die Benutzerfreundlichkeit und die Akzeptanz des erfindungsgemäßen Verfahrens ist es von entscheidender Bedeutung, wenn auch die Übermittlung der Identifikationskennung ohne Interaktion des Benutzers und ohne Kenntnis des Benutzers erfolgt. Das erfindungsgemäße Verfahren hat insbesondere den Vorteil, dass sich für den Benutzer keine Änderung des gewohnten Telefonieverhaltens ergibt, da ihm das erfindungsgemäße Verfahren alle Schritte zur Ermittlung der kostengünstigsten Kommunikationsverbindung im Hintergrund und ohne Kenntnis bzw. Interaktion des Benutzers durchführt.

Gemäß einer Weiterbildung stellt das Gateway die zweite Kommunikationsverbindung über eine Vermittlungseinrichtung des Kommunikationsnetzwerks her. Das Gateway ist mit dem Kommunikationsnetzwerk über zumindest einen Kommunikationsweg verbunden, bekommt die Identifikationskennung der Kommunikationsgegenstelle übertragen und stellt dann über die Vermittlungseinrichtung des Kommunikationsnetzwerks die Verbindung her. Bei einem erfolgreichen Verbindungsaufbau zur Kommunikationsgegenstelle wird die erste mit der zweiten Kommunikationsverbindung gekoppelt und somit eine Kommunikationsverbindung zwischen der Mobilstation und der Kommunikationsgegenstelle hergestellt.

Eine Aufzeichnung der hergestellten Kommunikationsverbindungen die mittels eines Datenaufzeichnungsmoduls am Gateway durchgeführt wird hat den Vorteil, dass sich aus den aufgezeichneten Kommunikationsverbindungen eindeutig die jeweiligen Kommunikationsparameter nachweisen lassen. Insbesondere ist dies von Vorteil, wenn zu einem späteren Zeitpunkt bspw. in einem Streitfall, eine über das Gateway hergestellte Kommunikationsverbindung nachgewiesen werden muss. Im Sinne von Telekommunikationsrichtlinien ist diese Ausbildung weiters von Vorteil, da der Betreiber des Gateways bzw. des erfindungsgemäßen Kommunikationsdienstes Aufzeichnungen über die durchgeführten Kommunikationsverbindungen eine vorgegebene Zeitspanne lang aufbewahren muss.

Von besonderem Vorteil ist eine Ausbildung, bei der aus den aufgezeichneten Verbindungsdaten eine Gebühreninformation erzeugt wird, da somit ohne zusätzliche Verfahrensschritte direkt aus den Verbindungsdaten die Gebühr für die aufgebauten Kommunikationsverbindungen abgeleitet werden kann. Der Benutzer der Mobilstation bekommt für jede abgehende Verbindung die kostengünstigste Kommunikationsverbindung bereitgestellt, die anfallenden Kosten zum Aufbau der ersten und/oder zweiten Kommunikationsverbindung werden aus den Verbindungsdaten ermittelt und dem Benutzer periodisch in Rechnung gestellt.

Gemäß einer Weiterbildung werden ferner die Gebührendaten an eine Kontroll- und Auswerteeinrichtung übermittelt. Dies hat den Vorteil, dass der Benutzer jederzeit einfachen Zugriff auf die angefallenen Verbindungskosten hat und somit insbesondere eine einfache Kontrolle der aufgezeichneten Verbindungen möglich ist. Beispielsweise können so Vorkehrungen getroffen werden, um eine Alarmierung des Benutzers über eine übermäßig hohe Kommunikationsgebühr zu informieren.

Von ganz besonderem Vorteil ist es, wenn eine Kontroll- und Auswerteeinrichtung eine Mehrzahl von Kommunikationswegtabellen hinterlegt hat, wobei bei Bedarf bzw. nach Anforderung eine ausgewählte Kommunikationswegtabelle über das Mobilfunknetzwerk an die Mobilstation übertragen wird. Im Zuge der Liberalisierung des Telekommunikationsmarktes gibt es eine Vielzahl unterschiedlicher Mobilfunknetzbetreiber mit zum Teils deutlich unterschiedlichen Gebühren für die einzelnen Kommunikationswege. Diese Vielfalt verschärft sich durch die Möglichkeit der Mobilkommunikation außerhalb des Heimatnetzes und weiters durch die Tatsache, dass sich die Gebühreninformation für die einzelnen Kommunikationswege in raschen Zyklen ändert. Seitens des Dienstbetreibers des erfindungsgemäßen Verfahrens werden daher die Kommunikationswegtabellen permanent aktualisiert und entsprechend ihrer Relevanz für den Benutzer einer Mobilstation aktualisiert, insbesondere basierend auf den jeweiligen Vertragsdaten des Benutzers mit dem Mobilfunknetzbetreiber.

Wiederum im Hinblick auf eine möglichst einfache Anwendung des Verfahrens, insbesondere das durch den Benutzer keine komplexen Bedienhandlungen erforderlich sind, hat die anspruchsgemäße Ausbildung den ganz besonderen Vorteil, dass die aktualisierten Kommunikationswegtabellen im Hintergrund an die Mobilstation übertragen werden, sodass der Benutzer sicher sein kann, stets eine aktuelle Kommunikationswegtabelle verfügbar zu haben und somit immer über die kostengünstigste Kommunikationsverbindung der Gesprächsaufbau durchgeführt wird.

Eine besonders vorteilhafte Weiterbildung erhält man, wenn der Benutzer über eine Schnittstelle an der Kontroll- und Auswerteeinrichtung auf die hinterlegten Kommunikationswegtabellen zugreifen und diese verändern kann. Für jeden Benutzer, insbesondere für jede Mobilstation, wird bei der Anmeldung bzw. Aktivierung des erfindungsgemäßen Verfahrens zumindest eine spezifische Kommunikationswegtabelle angelegt, in der standardmäßig vorbelegte Einträge der Entscheidungskriterien für den zu wählenden Kommunikationsweg hinterlegt sind. Da der Benutzer bspw. mit dem Mobilfunknetzbetreiber Sondervereinbarungen getroffen haben kann, diese Vereinbarungen aber dem Betreiber des erfindungsgemäßen Verfahrens nicht bekannt sein können, ist es von ganz besonderem Vorteil, wenn der Benutzer die Kommunikationswegtabelle und damit die Entscheidungskriterien für die automatische Wahl des kostengünstigsten Kommunikationswegs frei verändern bzw. konfigurieren kann.

Gemäß einer Weiterbildung kann von der Mobilstation eine Übertragung der Kommunikationswegtabelle angefordert werden. Diese Ausbildung hat den Vorteil, dass die Übertragung der Kommunikationswegtabelle von der Mobilstation angestoßen wird, insbesondere kann der Benutzer die Übertragung injizieren, wodurch sich der Zeitpunkt der Übertragung gezielt bestimmen lässt. Eine Datenübertragung über ein Mobilfunknetz, insbesondere über ein fremdes Mobilfunknetz, ist zumeist recht kostspielig. Ist nun der Zeitpunkt der Übertragung der Kommunikationswegtabelle gezielt festlegbar, kann sichergestellt werden, dass die Übertragung bspw. nur mit den kostengünstigeren Datentarif des Heimatnetzes erfolgt.

Um den Benutzer bspw. über eine Aktualisierung der Kommunikationswegtabelle durch den Dienstbetreiber zu informieren, kann an die Mobilstation bspw. eine Kurznachricht gesendet werden, die den Benutzer auffordert, sich die aktualisierte Kommunikationswegtabelle von der Kontroll- und Auswerteeinrichtung abzuholen. Dem Benutzer bleibt auch in diesem Fall die Entscheidungsfreiheit über den Zeitpunkt der Aktualisierung der Kommunikationswegtabelle.

Einen ganz besonderen Vorteil stellt eine anspruchsgemäße Ausbildung dar, bei der die Kennung der Mobilstation mittels Signalisierungsinformation an das Gateway übertragen wird, insbesondere kommt es zu keinem Aufbau einer gebührenpflichtigen Kommunikationsverbindung. Wenn die Mobilstation in einem Fremdnetz angemeldet ist, fallen für alle Kommunikationsverbindungen hohe Kosten an, insbesondere sind abgehende Kommunikationsverbindungen teurer als ankommende Verbindungen. Die anspruchsgemäße Ausbildung hat nun den Vorteil, dass über das Gateway eine Kommunikationsverbindung zu einer gewünschten Kommunikationsgegenstelle aufgebaut werden kann, wobei die erste Kommunikationsverbindung vom Gateway aus zur Mobilstation aufgebaut wird, wodurch für den Benutzer die deutlich günstigeren Passivgesprächsgebühren anfallen. Der Benutzer hat auch in diesem Fall keinen zusätzlichen Aufwand bei der Herstellung einer Kommunikationsverbindung, die Übertragung der Kennung an das Gateway und die Annahme der zurückkommenden, eingehenden Kommunikationsverbindung wird durch die Verbindungssteuerungskontrolle im Hintergrund durchgeführt. Somit ist sichergestellt, dass auch bei einem Verbindungsaufbau in einem fremden Mobilnetz stets die kostengünstigste Kommunikationsverbindung gewählt wird, ohne dass durch den Benutzer eine Bedienhandlung erforderlich ist.

Gemäß dem bekannten 2G bzw. 3G Mobilfunkstandard wird bei einem Verbindungsaufbau die Identifikationskennung der rufenden Mobilstation in der Verbindungsaufbauanforderung mit übertragen, insbesondere handelt es sich dabei um die Rufnummer der Mobilstation. Nun kann der Benutzer diese Nummernübertragung gezielt unterdrücken, bzw. wird diese Kennung in manchen Mobilfunknetzen nicht übertragen. Die anspruchsgemäße Weiterbildung hat nun den weiteren ganz besonderen Vorteil, dass die Kennung der Mobilstation auch eine eindeutige Codierung umfasst, die mit der Verbindungsaufbauanforderung mit übertragen wird und durch den Benutzer nicht unterdrückbar ist. Daher ist in jedem Fall eine Identifikation der rufenden Mobilstation durch das Gateway möglich.

Durch die anspruchsgemäße Weiterbildung, bei der eine Kommunikationssteuerung am Gateway die Kennung der Mobilstation aus einer eingehenden Verbindungsaufbauanforderung extrahiert und dann die Verbindung ablehnt ist in vorteilhafter Weise sichergestellt, dass es bei einem Verbindungsaufbauwunsch aus einem fremden Mobilfunknetz heraus zu einer aktiven Kommunikationsverbindung kommen kann.

Die anspruchsgemäße Ausbildung, bei der das Gateway die erste Kommunikationsverbindung über eine Vermittlungseinrichtung des Mobilfunknetzwerks zur Mobilstation aufbaut ist sichergestellt, dass bei einer Verbindungsaufbauanforderungen aus einem fremden Mobilnetz, das erfindungsgemäße Verfahren ein passive Kommunikationsverbindung zur Mobilstation herstellt, wobei für den Benutzer die deutlich günstigeren Passivgesprächsgebühren anfallen.

Eine besonders vorteilhafte Weiterbildung erhält man, wenn die Vermittlungssteuerungskontrolle abhängig von der Netzwerkkennung der Mobilstation auf unterschiedliche Bereiche in der Kommunikationswegtabelle zugreift. Eine Mobilstation, insbesondere ein Mobiltelefon, wird durch kommunikative Anschaltung einer Netzbetreiberidentifikationsvorrichtung, einer so genannten SIM-Karte, für den kommunikativen Betrieb freigeschaltet. Die Mobilstation ist danach dazu ausgebildet, eine Kommunikationsverbindung mit dem Heimatnetz des Mobilfunknetzbetreibers, sowie mit einer Mehrzahl von Partnernetzen herstellen zu können. Die technischen Einrichtungen zum Aufbau bzw. zur Abwicklung einer Kommunikationsverbindung sind vollständig in der Mobilstation integriert, auf der SIM-Karte sind im wesentlichen die Zugangskonfigurationsdaten zur Herstellung einer Kommunikationsverbindung mit dem Mobilfunknetz hinterlegt. Der Benutzer kann also eine Mehrzahl unterschiedlicher SIM-Karten haben, und somit von jedem Netzbetreiber ein zugewiesenes Heimatnetz verfügbar haben. Dies ist insbesondere bei Vielreisenden von Vorteil, die für eine Mehrzahl unterschiedlicher Mobilfunknetzbetreiber in unterschiedlichen Ländern SIM-Karten besitzen.

Mit der anspruchsgemäßen Ausbildung ist nun sichergestellt, dass die Verbindungssteuerungskontrolle die Netzwerkkennung der aktuell aktiven SIM-Karte auswertet und dann im weiteren, auf die für diese Netzwerkkennung gültigen Entscheidungsregeln und Kommunikationsverbindungen in der Kommunikationswegtabelle zugreift. Insbesondere bedeutet diese Ausbildung, dass die Verbindungssteuerungskontrolle auf der Mobilstation für eine Mehrzahl unterschiedlicher Netzwerkkennungen, die durch eine eingelegte bzw. angemeldete SIM-Karte festgelegt werden, jeweils die günstigste Kommunikationsverbindung zu wählen, ohne das der Benutzer die Kommunikationswegtabelle aktualisieren bzw. neu laden muss.

Die Aufgabe der Erfindung wird gemäß Anspruch 17 auch durch ein Telekommunikationssystem zur Durchführung des erfindungsgemäßen Verfahrens gelöst.

Wenn anspruchsgemäß im Gateway ein Koppelnetzwerk vorhanden ist, kann das Gateway in vorteilhafter Weise die erste und zweite Kommunikationsverbindung miteinander verbinden und somit eine durchgehende Kommunikationsverbindung von der Mobilstation zur Kommunikationsgegenstelle herstellen, ohne dass dafür eine zusätzliche Einrichtung erforderlich wäre.

Auch kann das Gateway eine Kommunikationsgegenstelle mit einer eindeutigen Identifikationskennung aufweisen wodurch sichergestellt ist, dass das Gateway über die Vermittlungsstelle des Mobilfunknetzwerks mittels standardisierter und bekannter Verbindungsaufbauverfahren erreichbar ist, insbesondere dass sich das Gateway wie eine bekannte Kommunikationsgegenstelle verhält. Dadurch ist weiters sichergestellt, dass das erfindungsgemäße Verfahren, insbesondere die Verbindungssteuerungskontrolle an der Mobilstation auf Standardkomponenten der Mobilstation zum Aufbau einer Kommunikationsverbindung zum Gateway zurückgreifen kann, wodurch die Verbindungssteuerungskontrolle auf einer überwiegender Mehrzahl der Mobilstationen ausführbar ist.

Weist die Kommunikationswegtabelle ferner eine hierarchische Struktur auf, ist eine Trennung von kommunikationsrelevanten Parametern sowie Entscheidungsregeln und Verbindungswegen einfach und sicher möglich. Insbesondere bietet eine hierarchische Struktur den besonderen Vorteil, dass sich die relevanten Entscheidungsregeln leicht und schnell finden lassen, da nicht die gesamte Kommunikationswegtabelle durchsucht werden muss, was insbesondere bei einer umfangreichen Kommunikationswegtabelle eine deutliche Geschwindigkeitssteigerung und somit einen schnellen Verbindungsaufbau möglich mach, was wiederum sehr vorteilhaft für die Akzeptanz des durchgeführten Verfahrens führt.

Gemäß einer Weiterbildung weist die Mobilstation eine Koppelvorrichtung für eine SIM-Karte auf, wobei in der SIM-Karte eine Netzwerkkennung hinterlegt ist. Durch diese Ausbildung wird in vorteilhafter Weise eine Trennung der technischen Vorrichtung bzw. Einrichtungen zum Aufbau bzw. zur Abwicklung einer Kommunikationsverbindung über ein Mobilfunknetzwerk, von der Berechtigung zum Aufbau einer solchen Kommunikationsverbindung getrennt. Insbesondere ist durch diese Ausbildung sichergestellt, dass eine Mobilstation mit einer Mehrzahl von Mobilfunknetzbetreibern kommunikativ verbindbar ist, wobei jedoch die Verbindungssteuerungskontrolle und die Kommunikationswegtabelle von der jeweils eingelegten bzw. angekoppelten SIM-Karte unabhängig sind und immer der technischen Vorrichtung des Mobilteils zugeordnet bleiben.

Insbesondere von Vorteil ist es, wenn die hierarchische Struktur nach zumindest einer Netzwerkkennung strukturiert angeordnet ist. Da die Verbindungssteuerungskontrolle und die Kommunikationswegtabelle auf der Applikationsplattform bzw. im Datenspeicher der Mobilstation angeordnet sind und somit basierend auf der Netzwerkkennung der Mobilstation die Tabelle nach relevanten Einträgen zu durchsuchen wäre, stellt es einen besonderen Vorteil dar, wenn alle für die aktuell Netzwerkkennung irrelevanten Parameter sowie Kommunikationswege durch die Auswahl auf die Netzwerkkennung bezogenen hierarchischen Struktur automatisch unberücksichtigt bleiben. Diese Ausbildung stellt somit eine sichere und zuverlässige Trennung der Parameter und Kommunikationswege nach der Netzwerkkennung sicher, was wiederum vorteilhaft für einen schnellen Verbindungsaufbau ist.

Die Erfindung wird im nachfolgenden anhand der in den Zeichnungen dargestellten Ausführungsbeispiele näher erläutert.

Es zeigen:
- Fig. 1: ein Telekommunikationssystem zur Durchführung des erfindungsgemäßen Verfahrens;
- Fig. 2: ein Ablaufdiagramm der erfindungsgemäßen Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfmdungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

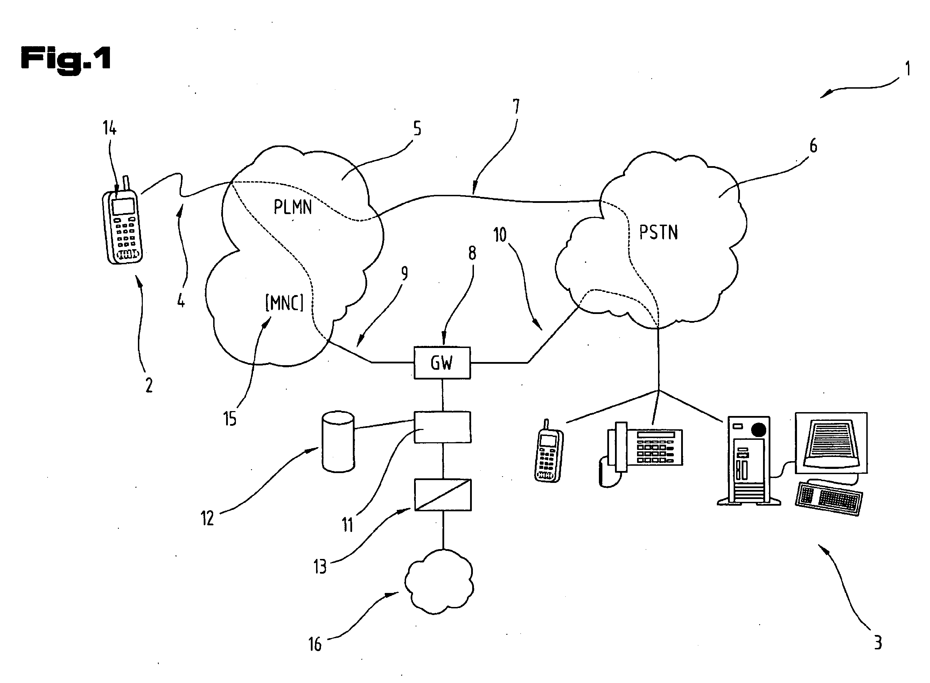

Fig. 1 zeigt ein Telekommunikationssystem 1 das zum automatischen und kostenoptimierten Aufbau einer Telekommunikationsverbindung zwischen einer Mobilstation 2 und einer Kommunikationsgegenstelle 3 ausgebildet ist. Die Mobilstation 2 ist über eine Funkverbindung 4 mit einem zellularen Mobilfunknetzwerk 5 verbunden, weiters ist die Kommunikationsgegenstelle 3 mit einem Kommunikationswerk 6 verbunden, wobei zwischen dem Mobilfunknetzwerk 5 und dem Kommunikationsnetzwerk 6 eine direkte Kommunikationsverbindung 7 besteht. Ferner ist zwischen dem Mobilfunknetzwerk 5 und dem Kommunikationsnetzwerk 6 ein Gateway 8 angeordnet, dass über eine erste 9 und zweite 10 Kommunikationsverbindung mit dem Mobilfunknetzwerk bzw. dem Kommunikationsnetzwerk verbunden ist. Das Gateway 8 ist weiters mit einer Kontroll- und Auswerteeinrichtung 11 verbunden, wobei auf dieser Einrichtung eine Mehrzahl von Kommunikationswegtabellen hinterlegt sind, insbesondere in einem Datenspeichermodul 12. Über eine Schnittstelle 13 ist die Kontroll- und Auswerteeinrichtung 11 mit einem Datennetzwerk 14 verbunden, wodurch der Benutzer auf die hinterlegten Kommunikationswegtabellen zugreifen kann.

Die Mobilstation 2 weist eine Mensch-Maschine-Schnittstelle 14 auf, die bspw. durch eine Tastatur, eine Anzeige und eine Benutzeroberfläche gebildet sein kann und über die bzw. mit der der Benutzer die eindeutige Identifikationskennung der Kommunikationsgegenstelle 3 auswählen bzw. eingeben kann. Vereinfacht lässt sich eine Mobilstation durch zwei Komponenten darstellen, wobei eine Komponente die technische Abwicklung einer Kommunikation über einen Mobilfunkkanal durchführt und eine zweite Komponente die Kommunikationsparameter sowie die Zugriffs- und Berechtigungsdaten zur Kopplung mir dem Mobilfunknetz bereitstellt. Das technische Kommunikationsmodul einer Mobilstation weist eine international eindeutige Geräteidentifikationskennung auf, die sogenannte IMEI. Das Netzwerkzugriffsmodul ist bevorzugt als SIM-Karte ausgebildet und hat eine Netzwerkkennung (MNC) des Mobilfunknetzwerkbetreibers hinterlegt. Jedes Mobilfunknetz das den 2G- bzw. 3G-Mobilfunkstandard genügt, hat ebenfalls eine Netzwerkkennung hinterlegt. Als so genanntes Heimatnetz ist nun jenes Mobilfunknetz zu sehen, bei dem die Netzwerkkennung 15 mit der in der Mobilstation hinterlegten Netzwerkkennung übereinstimmt. Ist die Mobilstation in einem Mobilfunknetz angemeldet, bei dem die Netzwerkkennungen nicht übereinstimmen, kommt es zur Verrechnung von zusätzlichen Funkkanalgebühren, dem so genannten Roaming.

Das Kommunikationsnetzwerk 6 wird durch ein bekanntes vermittlungsbasiertes Kommunikationsnetzwerk gebildet, wobei die Kommunikationsgegenstelle 3 bspw. eine Mobilstation die in einem anderen Mobilfunknetz eingebucht ist, ein Festnetztelefon sowie eine Datengegenstelle sein kann. Die Kommunikationsgegenstelle weist jedenfalls eine eindeutige Identifikationskennung (SID) auf, die durch einen Bereichscode (AC) und eine Teilnehmerkennung (SC) gebildet ist. Durch diese Identifikationskennung kann das Kommunikationsnetzwerk 6 den Verbindungsweg zur Kommunikationsgegenstelle ermittelt und die Kommunikationsverbindung aufbauen.

Auch das Gateway 8 weist eine solche eindeutige Identifikationskennung auf, da es von der Mobilstation 2 über eine Vermittlungseinrichtung des Mobilfunknetzwerks 5 erreichbar sein muss. Am Gateway 8 findet weiters eine Aufzeichnung der hergestellten Kommunikationsverbindungen statt, wobei aus diesen aufgezeichneten Daten die durch den Benutzer zu bezahlenden Kommunikationsgebühren ermittelt werden. Die Verbindungsdaten bzw. die Gebühreninformation wird an die Kontroll- und Auswerteeinrichtung 11 übermittelt und von dort bspw. an ein Verrechnungssystem des Dienstbetreibers weitergeleitet. Eine weitere Aufgabe der Kontroll- und Auswerteeinrichtung besteht darin, die hinterlegten Kommunikationswegtabellen bzw. die Verbindungssteuerungskontrolle nach Anforderung durch die Mobilstation 2 über das Mobilfunknetzwerk 5 an die Mobilstation zu übertragen. Über eine Schnittstelle 13 ist die Kontroll- und Auswerteeinrichtung 11 mit einem Datennetzwerk 16 verbunden, wodurch der Benutzer nach erfolgter Authentifizierung Zugriff auf die für ihn relevanten Kommunikationswegtabellen hat und diese gezielt ändern bzw. aktualisieren kann. Das Datennetzwerk 16 ist bevorzugt durch das Internet gebildet was den besonderen Vorteil hat, dass die erforderlichen Kommunikationseinrichtungen weit verbreitet sind und somit keine zusätzlichen Kommunikationsvorrichtungen zu schaffen sind.

Bei der Anmeldung bzw. bei der Aktivierung des erfindungsgemäßen Verfahrens wird von der Kontroll- und Auswerteeinrichtung 11, über das Mobilfunknetzwerk 5 eine Aktivierungskennung an die Mobilstation 2 gesendet. Diese Aktivierungskennung enthält Anweisungen, wie die Verbindungssteuerungstabelle und die Kommunikationswegtabelle auf die Mobilstation übertragen werden. Bevorzugt wird als Aktivierungskennung eine Kurznachricht, eine so genannte SMS, an die Mobilstation übertragen, wobei die Kurznachricht einen Verweis auf die Kontroll- und Auswerteeinrichtung enthält. Der Benutzer kann nun gezielt diesen Verweis aktiveren, bspw. zur Ausnützung eines günstigen Downloadtarifs, wobei die Ablaufsteuerung der Mobilstation die Übertragung der Verbindungssteuerungstabelle und die Kommunikationswegtabelle anfordert und diese bevorzugt mittels WAP-Push übertragen bekommt.

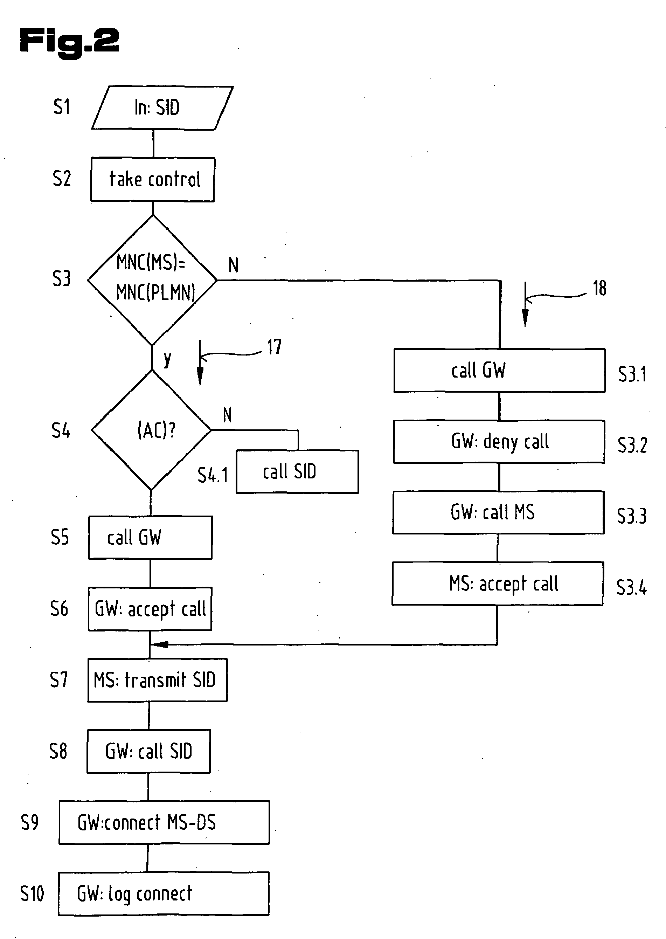

Fig. 2 zeigt ein Ablaufdiagramm des erfindungsgemäßen Verfahrens, wobei manche der dargestellten Verfahrensschritte nicht auf der Mobilstation, sondern am Gateway durchgeführt werden. Dies ist durch ein vorangestelltes GW gekennzeichnet.

Im Schritt S 1 wählt der Benutzer die Identifikationskennung (SID) der gewünschten Kommunikationsgegenstelle aus, bzw. gibt diese über ein Eingabemedium an der Mobilstation ein. Die vollständige Eingabe der Identifikationskennung löst die Vorgänge zum Aufbau einer Kommunikationsverbindung mit der Kommunikationsgegenstelle aus. Bei einem Mobiltelefon wird diese Verbindungsaufbauanforderungen bspw. durch Betätigen der Rufaufbautaste ausgelöst.

Dieses Ereignis wird im Schritt S2 von der Verbindungssteuerungskontrolle erkannt, worauf diese die Abwicklung des weiteren Gesprächsaufbaus übernimmt. Da die Verbindungssteuerungskontrolle auf einer Applikationsplattform auf der Mobilstation ausgeführt wird, ist diese vollständig in die Ablaufkontrolle der Mobilstation integriert und kann somit auf alle wesentlichen Komponenten der Mobilstation über bereitgestellte Schnittstellen zugreifen.

In einem ersten Schritt (S3) ermittelt die Verbindungssteuerungskontrolle, ob die Mobilstation im eigenen oder in einem fremden Mobilnetz angemeldet ist. Dazu wird die Netzwerkkennung (MNC) der Mobilstation mit der Netzwerkkennung des Mobilfunknetzwerks (PLMN) verglichen. Stimme die beiden Kennungen überein, ist die Mobilstation im Heimatnetz angemeldet und es wird im Weiteren ein sogenanntes Call-through-Verfahren 17 durchgeführt. Stimmen die beiden Kennungen jedoch nicht überein, ist als die Mobilstation in einem fremden Mobilfunknetz angemeldet, und es wird im Weiteren ein sogenanntes Call-Back-Verfahren 18 durchgeführt.

Als ersten Schritt (S4) des Call-through-Verfahrens 17 gilt es herauszufinden, welche die günstigste Kommunikationsverbindung zur gewünschten Kommunikationsgegenstelle ist. Aufgrund des stetigen Wettbewerbs bietet beinahe jeder Mobilfunknetzbetreiber eine Vielzahl unterschiedlicher Tarife an, wobei es für jeden Tarif wiederum eine Mehrzahl unterschiedlich vergebührter Kommunikationswege gibt. Insbesondere sind zumeist in jedem Vertrag ein oder mehrere Gruppen von Kommunikationsgegenstellen über eine kostenlose bzw. eine äußerst kostengünstigste Kommunikationsverbindung erreichbar. Zur Ermittlung der jeweiligen Kommunikationsweggebühr wird aus der Identifikationskennung (SID) der Bereichscode (AC) sowie ggf. ein Abschnitt der Teilnehmerkennung (SC) extrahiert und mit den Einträgen der Kommunikationswegtabelle verglichen. Enthält die Kommunikationswegtabelle für die extrahierte Kennung keinen Eintrag bedeutet das, dass es für diese aufzubauende Kommunikationsverbindung keinen günstigeren Kommunikationsweg gibt und somit eine direkte Kommunikationsverbindung aufgebaut werden kann.

Zum Aufbau einer direkten Kommunikationsverbindung (S4.1) stoppt die Verbindungssteuerungskontrolle die weiteren Arbeiten und gibt die Ablaufsteuerung an die Steuerungsmodule der Mobilstation zurück, die in bestimmungsgemäßer Weise die Kommunikationsverbindung aufbauen.

Konnte für die anzuwählende Kommunikationsgegenstelle ein Eintrag in der Kommunikationswegtabelle gefunden werden, wird im nächsten Schritt (S5) eine Verbindung zum Gateway aufgebaut, in dem dieses über seine eigene eindeutige Identifikationskennung angerufen wird.

Das Gateway akzeptiert die eingehende Verbindungsaufbauanforderung (S6) und stellt somit eine Kommunikationsverbindung zwischen der Mobilstation und dem Gateway her. Da das Gateway zumeist über einen kostenlosen Kommunikationsweg erreichbar ist, fallen somit trotz hergestellter Kommunikationsverbindungen keine Gebühren an.

Nach hergestellter Kommunikationsverbindung wird die Identifikationskennung der Kommunikationsgegenstelle von der Mobilstation mittels Tonwahl an das Gateway übertragen (S7), insbesondere wird die Kennung mittels DTMF übertragen. Das Gateway nimmt die übertragene Identifikationskennung an und stellt seinerseits eine zweite Kommunikationsverbindung zur Kommunikationsgegenstelle her (S8).

Nach Herstellen der zweiten Kommunikationsverbindung (S9) verbindet das Gateway die erste und die zweite Kommunikationsverbindung, und damit die Mobilstation mit der Kommunikationsgegenstelle.

Zusätzlich werden Verbindungsparameter wie bspw. die Gesprächsdauer und die Identifikationskennung der Kommunikationsgegenstelle erfasst und mitprotokolliert (S 10). Aus diesen Verbindungsdaten wird die Gebühreninformation zur Verrechnung der Gesprächsgebühren mit dem Benutzer ermittelt.

Beim so genannten Call-Back-Verfahren 18 sind andere Erfordernisse zu erfüllen. Da die Mobilstation in diesem Fall in einem fremden Mobilfunknetz angemeldet ist, fallen für jede hergestellte Kommunikationsverbindung sofort deutlich höhere Kosten an, wobei ankommende Kommunikationsverbindungen günstiger sind als abgehende. Um hier in vorteilhafter Weise Kosten zu sparen und gleichzeitig den Bedienkomfort für den Benutzer nicht einzuschränken gilt es also, eine abgehende Verbindung in eine ankommende umzulenken, ohne das seitens des Benutzers eine Interaktion erforderlich ist, bzw. dass der gewohnte Telefonkomfort durch die Umleitung eingeschränkt wird.

Im ersten Schritt (S3.1) wird daher von der Mobilstation das Gateway angerufen. Durch die Rufnummernübertragung erkennt das Gateway die Identifikationskennung der rufenden Mobilstation, extrahiert diese Kennung und weist den Gesprächsaufbau ab (S3.2), sodass es zu keiner Kommunikationsverbindung kommt.

Im nächsten Schritt (S3.3) baut das Gateway die erste Kommunikationsverbindung zur Mobilstation auf, wobei die Verbindungssteuerungskontrolle an der Mobilstation den erwarteten eingehenden Anruf annimmt (S3.4). Nun besteht zwischen der Mobilstation und dem Gateway eine Kommunikationsverbindung, über die die Identifikationskennung der Kommunikationsgegenstelle übertragen wird (S7). Die folgenden Verfahrensschritte sind identisch denen beim Call-through-Verfahren 17.

Die Ausführungsbeispiele zeigen mögliche Ausführungsvarianten des Verfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des Telekommunikationssystems dieses bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 und 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Telekommunikationssystem
- 2: Mobilstation (MS)
- 3: Kommunikationsgegenstelle
- 4: Funkverbindung
- 5: Zellulares Mobilfunknetzwerk (PLMN)
- 6: Kommunikationsnetzwerk (PSTN)
- 7: direkte Kommunikationsverbindung
- 8: Gateway (GW)
- 9: erste Kommunikationsverbindung
- 10: zweite Kommunikationsverbindung
- 11: Kontroll- und Auswerteeinrichtung
- 12: Datenaufzeichnungs- bzw. speichermodul
- 13: Schnittstelle
- 14: Mensch-Maschine-Schnittstelle (HMI)
- 15: Netzwerkkennung (MNC)
- 16: Datennetzwerk
- 17: Call-back
- 18: Call-through

## Patentansprüche

1. Verfahren zum automatischen und kostenoptimierten Aufbau einer Telekommunikationsverbindung zwischen einer mobilen Kommunikationsvorrichtung und einer Kommunikationsgegenstelle, umfassend zumindest ein zellulares Mobilfunknetzwerk (5) mit einer eindeutigen Netzwerkkennung (15), zumindest eine Mobilstation (2) als mobile Kommunikationsvorrichtung, die mit dem Mobilfunknetzwerk kommunikativ verbunden ist (4) und die eine eigene Netzwerkkennung hinterlegt hat, ein Kommunikationsnetzwerk (6), das zumindest über ein Gateway (8) und eine Direktverbindung (7) mit dem Mobilfunknetzwerk (5) verbunden ist und zumindest eine Kommunikationsgegenstelle (3) aufweist, **umfassend die Schritte**
- Eingabe oder Auswahl einer eindeutigen Identifikationskennung der gewünschten Kommunikationsgegenstelle an der Mobilstation und Auslösen einer Verbindungsaufbauanforderung
- Starten einer Verbindungssteuerungskontrolle, wobei diese Verbindungssteuerungskontrolle durch ein Software-Programm gebildet ist, das auf einer Applikationsplattform der Mobilstation (2) ausgeführt wird
- Prüfen ob die Netzwerkkennung der Mobilstation mit der Netzwerkkennung des Mobilfunknetzwerks übereinstimmt Stimmt überein: ○ Prüfen ob ein Abschnitt der Identifikationskennung in einer Kommunikationswegtabelle hinterlegt ist falls nein:
■ Herstellen einer direkten Kommunikationsverbindung (7) zwischen der Mobilstation (2) und der Kommunikationsgegenstelle (3) falls ja:
■ Herstellen einer ersten Kommunikationsverbindung (9) von der Mobilstation (2) zum Gateway (8)
■ Übermitteln der Identifikationskennung der Kommunikationsgegenstelle (3) an das Gateway (8)
■ Herstellen einer zweiten Kommunikationsverbindung (10) vom Gateway (8) zur Kommunikationsgegenstelle (3)
■ Koppeln der ersten (9) und zweiten (10) Kommunikationsverbindung im Gateway (8) Stimmt nicht überein:
○ Durchführen eines Verbindungsaufbaus von der Mobilstation (2) zum Gateway (8) ○ Extrahieren einer Kennung der rufenden Mobilstation (2) durch das Gateway (8) ○ Beenden des Verbindungsaufbaus durch das Gateway (8) ○ Herstellen einer ersten Kommunikationsverbindung (9) vom Gateway (8) zur Mobilstation (2) ○ Übermitteln der Identifikationskennung der Kommunikationsgegenstelle (3) von der Mobilstation (2) an das Gateway (8) ○ Herstellen einer zweiten Kommunikationsverbindung (10) vom Gateway (8) zur Kommunikationsgegenstelle (3) ○ Koppeln der ersten (9) und zweiten (10) Kommunikationsverbindung im Gateway (8).

2. Verfahren nach Anspruch 1, **dadurch gekennzeichnet, dass** die Mobilstation (2) eine Mensch-Maschine-Schnittstelle (14) aufweist, um die Identifikationskennung der Kommunikationsgegenstelle (3) eingeben zu können und/oder eine Identifikationskennung aus einer hinterlegten Mehrzahl von Identifikationskennungen auswählen zu können.

3. Verfahren nach Anspruch 1 oder 2, **dadurch gekennzeichnet, dass** die Verbindungssteuerungskontrolle und die Kommunikationswegtabelle über das zellulare Mobilfunknetzwerk (5) an die Mobilstation (2) übertragen werden.

4. Verfahren nach einem der Ansprüche 1 bis 3, **dadurch gekennzeichnet, dass** zum Herstellen einer direkten Kommunikationsverbindung (7), die Verbindungssteuerungskontrolle die Ablaufkontrolle an die Applikationsplattform der Mobilstation (2) übergibt.

5. Verfahren nach einem der Ansprüche 1 bis 4, **dadurch gekennzeichnet, dass** die Identifikationskennung mittels Tonwahl an das Gateway (8) übermittelt wird.

6. Verfahren nach einem der Ansprüche 1 bis 5, **dadurch gekennzeichnet, dass** das die Verbindungssteuerungskontrolle die Identifikationskennung an das Gateway (8) übermittelt.

7. Verfahren nach einem der Ansprüche 1 bis 6, **dadurch gekennzeichnet, dass** das Gateway (8) die zweite Kommunikationsverbindung (10) über eine Vermittlungseinrichtung des Kommunikationsnetzwerks (6) herstellt.

8. Verfahren nach einem der Ansprüche 1 bis 7, **dadurch gekennzeichnet, dass** am Gateway (8) ein Datenaufzeichnungsmodul (12) vorhanden ist, dass eine Aufzeichnung der hergestellten Kommunikationsverbindungen durchführt.

9. Verfahren nach Anspruch 8, **dadurch gekennzeichnet, dass** aus den aufgezeichneten Verbindungsdaten eine Gebühreninformation erzeugt wird, wobei die Gebühreninformation an eine Kontroll- und Auswerteeinrichtung (11) übermittelt wird.

10. Verfahren nach einem der Ansprüche 1 bis 9, **dadurch gekennzeichnet, dass** die Kontroll- und Auswerteeinrichtung (11) eine Mehrzahl von Kommunikationswegtabellen hinterlegt hat, wobei bei Bedarf und/oder nach Anforderung eine ausgewählte Kommunikationswegtabelle über das Mobilfunknetzwerk (5) an die Mobilstation (2) übertragen wird.

11. Verfahren nach einem der Ansprüche 1 bis 10, **dadurch gekennzeichnet, dass** der Benutzer über eine Schnittstelle (13) an der Kontroll- und Auswerteeinrichtung (11) auf die hinterlegten Kommunikationswegtabellen zugreifen und diese verändern kann.

12. Verfahren nach einem der Ansprüche 1 bis 11, **dadurch gekennzeichnet, dass** von der Mobilstation (2) eine Übertragung der Kommunikationswegtabelle angefordert wird.

13. Verfahren nach einem der Ansprüche 1 bis 12, **dadurch gekennzeichnet, dass** die Kennung der Mobilstation (2) mittels Signalisierungsinformation an das Gateway (8) übertragen wird.

14. Verfahren nach Anspruch 13, **dadurch gekennzeichnet, dass** eine Kommunikationssteuerung am Gateway (8) die Kennung der Mobilstation (2) aus einer eingehenden Verbindungsaufbauanforderung extrahiert und die Verbindungsanforderung ablehnt.

15. Verfahren nach einem der Ansprüche 13 oder 14, **dadurch gekennzeichnet, dass** das Gateway (8) die erste Kommunikationsverbindung (9) über eine Vermittlungseinrichtung des Mobilfunknetzwerks (5) zur Mobilstation (2) aufbaut.

16. Verfahren nach einem der Ansprüche 1 bis 15, **dadurch gekennzeichnet, dass** die Vermittlungssteuerungskontrolle abhängig von der Netzwerkkennung der Mobilstation (2) auf unterschiedliche Bereiche in der Kommunikationswegtabelle zugreift.

17. Telekommunikationssystem zur Durchführung des Verfahrens nach einem der Ansprüche 1 bis 16, umfassend eine Mobilstation (2) mit einer eindeutigen Gerätekennung, einer Applikationsplattform und einem Datenspeicher, ein Mobilfunknetzwerk (5) das zur kommunikativen Kopplung (4) mit der Mobilstation ausgebildet ist, ein Gateway (8) mit einem Koppelnetzwerk, das eine kommunikative Verbindung (9, 10) zum Mobilfunknetz (5) und zu einem Kommunikationsnetzwerk (6) aufweist und eine Kommunikationsgegenstelle (3) mit einer eindeutigen Identifikationskennung, wobei auf der Applikationsplattform oder im Datenspeicher eine Verbindungssteuerungskontrolle und eine Kommunikationswegtabelle mit einer hierarchische Struktur hinterlegt ist, und wobei am Gateway (8) eine Kommunikationssteuerung vorhanden ist und wobei das Gateway (8) eine Kommunikationsgegenstelle mit einer eindeutigen Identifikationskennung aufweist.

18. Telekommunikationssystem nach Anspruch 17, **dadurch gekennzeichnet, dass** die Mobilstation (2) eine Koppelvorrichtung für eine SIM-Karte aufweist, wobei in der SIM-Karte eine Netzwerkkennung hinterlegt ist.

19. Telekommunikationssystem nach Anspruch 17 oder 18, **dadurch gekennzeichnet, dass** die hierarchische Struktur nach zumindest einer Netzwerkkennung strukturiert angeordnet ist.
